# EUROPEAN PATENT SPECIFICATION

(11) **EP 3 753 842 B1**
(45) Date of publication and mention of the grant of the patent: **20.04.2022**
(21) Application number: 20179970.7
(22) Date of filing: 15.06.2020
(51) Int. Cl.: B63H 21/17, B63H 5/125, H02K 5/132

(54) **VESSEL PROPULSION DEVICE AND VESSEL WITH VESSEL PROPULSION DEVICE**
SCHIFFSANTRIEBSVORRICHTUNG UND SCHIFF MIT SCHIFFSANTRIEBSVORRICHTUNG
DISPOSITIF DE PROPULSION DE NAVIRE ET NAVIRE AVEC DISPOSITIF DE PROPULSION DE NAVIRE

(30) Priority: 17.06.2019 NL 2023328
(43) Date of publication of application: 23.12.2020
(73) Proprietor: Verhaar Omega B.V., 2172 HW Sassenheim (NL)
(72) Inventor: VERHAAR, Alexander Mark, 2342 CE OEGSTGEEST (NL); VERHAAR, Jan, 2342 CE OEGSTGEEST (NL)
(74) Representative: Arnold & Siedsma

(56) References cited:
- CN-C- 1 292 959
- DE-A1-102013 209 682
- US-A- 2 862 122

## Description

The present invention relates to a vessel propulsion device with a propeller which is connected to a drive shaft, and a vessel comprising a vessel propulsion device.

The known vessel propulsion device is used to drive a vessel by means of a propeller, i.e. a screw, which is driven from a housing of the vessel propulsion device. The housing is generally formed by a cast-iron housing having a substantially streamlined form so that it can move through the water with relatively low resistance in a direction opposite to the direction of thrust. For this purpose such a housing generally has an elongate droplet form, wherein the tail, i.e. the outer end toward which the droplet form narrows, is directed toward the propeller of the device. The housing thus substantially connects to the drive shaft of the propeller which exits the housing close to said tail. Such a vessel propulsion device is further mounted on an outer side of a hull of a vessel.

When the drive shaft is driven by a combustion engine, such as a diesel engine or gas turbine and the like, it is generally not placed in the housing. This is because the combustion engine is placed at a higher level, preferably at a location where a mechanic has access to the combustion engine for the purpose of maintenance operations and the like. In that case the drive shaft is therefore driven by means of mechanical couplings, such as gearboxes and drive shafts and the like, which are placed in the housing for the purpose of driving the drive shaft which is coupled to the propeller.

When the drive shaft is driven by an electric motor, it can be placed in the housing since an electric motor contains relatively few moving parts and consequently requires less frequent maintenance. Additionally, an electric motor only needs to be supplied with power by power cables which can be run to the electric motor in relatively simple and compact manner, this in contrast to mechanical connections in a combustion engine.

Patent document DE 10 2013 209682 A1, according to its abstract, relates to a housing for a propeller drive unit comprising a first housing part and a second housing part. The two housing parts are connected or can be connected to one another in a pressure-tight manner.

The first housing part comprises a shaft bore with a first shaft seal receptacle on an inside and with a second shaft seal receptacle on an outside. One of the housing parts comprises a pressure line connection, via which the interior of the housing can be subjected to pressure.

Patent document CN 1 292 959 C, according to its abstract, relates to a ship propulsion and/or steering unit device, which is at least partially surrounded by water. The unit includes an electric motor arranged in a cavity formed by the unit wall, and the propeller shaft is connected to the motor, which has a propeller installed outside the chamber, the device including mechanisms for using air or some other pressurized gaseous medium which pressurizes the chamber. It further relates to a method for controlling the ship propulsion and/or steering unit device, wherein the chamber is sealed by on the one hand with respect to the pressure of external water, and on the other hand is sealed with respect to the other compartments of the ship. The chamber is pressurized by a flowing gaseous medium, and the pressure in the chamber is monitored. Since the pressure is monitored by the mechanism, the chamber is monitored in a controllable manner. In addition, it relates to a method for improving cooling by a pressurized gaseous medium.

Patent document US 2 862 122 A, according to its preamble, relates to an enclosed dynamoelectric machine filled with an insulating liquid, with means for maintaining the luquid under pressure and means for effecting circulation of the liquid to dissipate heat generated in the liquid and in the machine.

A drawback of the known vessel propulsion device is that it is fairly difficult to insert a stator packet in the housing, or remove it in the case of repairs, when an electric motor is used to drive the drive shaft of the known vessel propulsion device. Since the stator must remain stationary, the stator packet is arranged countersunk inside the housing. Due to the streamlined form of the housing however, the stator packet, which must connect to the housing, has a larger diameter than the opening of the housing, e.g. at the blunt outer end of the droplet-shaped housing. This is because the housing must also be connected to the hull of the vessel in streamlined manner by means of a column or arm or the like, i.e. the housing cannot be opened at the widest part thereof, since the column or the arm prevents it. The housing must therefore be brought to a high temperature, e.g. 200°C, so that it expands, after which the stator packet can be inserted or removed. A relatively great force is required when the stator packet is inserted, and particularly when it is removed, i.e. the packet is pressed in or out. There is therefore a real danger of damage to the housing and/or the stator packet as a result of these relatively great forces required. It is also a drawback that in its operative state, i.e. in assembled state, such an electric motor can only be tested once it has been fully built into the housing. Electric motors can further heat up and expand significantly during operation, whereby the mechanical stresses in the housing and electric motor can increase, which is detrimental to the lifespan of the vessel propulsion device. This is because, in the known vessel propulsion device, the electric motor is placed in an air chamber in the housing. In addition, there is a danger of water from outside the housing finding its way into the housing and causing damage, such as short-circuiting and/or oxidation, in the electric motor.

In order to obviate the above stated drawback of the prior art the present invention provides a vessel propulsion device according to claim 1.

As a result of the releasable integral drive unit the housing need comprise only a recess which corresponds with the drive unit and in which the drive unit can be arranged, e.g. by means of sliding in thereof, without significant force being required to do so. The drive unit therefore forms a separate integral component of the vessel propulsion device. Such a drive unit can also be manufactured in very compact manner and with very accurate tolerances, separately of the vessel propulsion device, so that it takes up a relatively small volume compared to an electric motor to be assembled in the housing, and can nevertheless produce the same power. Because accurate tolerances can be applied, the distance between the rotor and stator of the electric motor is kept very small, which significantly enhances the efficiency of the electric motor. A particular advantage of the integral drive unit according to the invention is that the electric motor incorporated in the drive unit can be tested extensively before being arranged in the vessel propulsion device. Fully immersing the drive unit in liquid, particularly oil, for instance by filling the housing therewith, ensures cooling and lubrication of the electric motor. This is because heat coming from the electric motor is distributed in the liquid in efficient manner owing to its higher thermal conductivity coefficient as compared to air, usually a factor of ten or more. All moving parts of the electric motor also lubricated continuously, which enhances the lifespan of such an electric motor. Because no separate lubrication of the bearings of the electric motor is required, the complexity of the propulsion device is reduced. Since the liquid comes into direct contact with the electric motor it must be (substantially) non-electrically conductive, i.e. electrically insulating, so that short-circuiting in the electric motor is prevented. The liquid further prevents the drive unit from coming into direct contact with water when a leak occurs in the housing, at least in the case of a damage opening of limited size, for instance due to collision with an object under water. A particularly reliable propulsion device is therefore obtained.

It is further noted that a vessel propulsion device can be provided with any desired propeller, i.e. screw, such as a normal propeller (e.g. pusher propeller), tractor propeller, dual propeller and the like.

The drive unit can be connected close to its outer ends to the housing by means of mounting means. At least one of the mounting means is formed from an annular mounting element and at least one flange which points radially inward from the inner edge of the mounting element and is substantially coplanar therewith, wherein the housing is coupled to the annular element and the drive unit is coupled to the at least one flange. The flanges are resilient flanges. Further spring elements are more preferably provided between the mounting means and the drive unit in order to enable expansion and shrinking of the drive unit. The mounting means are preferably separate construction elements, meaning that they are not attached to the drive unit and/or housing prior to mounting. In the known vessel propulsion device the drive thereof is suspended from, i.e. secured to, the housing only at the outer end at which it is inserted. According to the present invention, it is possible to suspend, i.e. secure, the drive, this being the drive unit, at both outer ends so that the relatively high torque of the electric motor is absorbed uniformly by the housing. Warping of the housing is therefore prevented, which enhances the lifespan of the vessel propulsion device according to the invention. When at least one of the mounting means is formed from an annular element and one or more flanges, the drive unit can be suspended from the flanges and the annular element is connected to the housing. As a result, a mounting means is provided which on the one hand can transmit a torque from the drive unit to the housing in effective manner and forms a rigid connection in peripheral direction, and on the other hand is flexible in axial direction of the drive unit as a result of the flanges, whereby expansion of the drive unit due to heat, or vice versa, shrinking due to low temperature, is enabled without significant mechanical stresses in the housing and/or the drive unit. The mounting means is more preferably manufactured from a metal, a rubber, a fibre-reinforced plastic and the like, or combinations thereof.

According to a further preferred embodiment of the vessel propulsion device, the electric motor is a permanent magnet motor. The known vessel propulsion devices make frequent use of squirrel cage motors and induction motors. The efficiency of a permanent magnet motor is however higher than that of squirrel cage and induction motors. In addition to a higher efficiency, permanent magnet motors generally have a more accurate rotation speed control and higher power density. The increased power density enables the housing of the vessel propulsion device to be made smaller while retaining its power, which results in decreased flow resistance in water and an improvement of the approach flow of water at the propeller. Such permanent magnet motors also heat up less quickly, which contributes to the reliability of the vessel propulsion device, since this device is subjected to less wear, e.g. at its bearings, and exerts less mechanical stress on the housing as a result of possible expansion. A relatively high torque is further available at a low rotation speed. The permanent magnet motor preferably comprises ferrite magnets which are mounted on its rotor. Alternatively, the permanent magnet motor comprises neodymium magnets which are mounted on its rotor. It is possible to envisage the permanent magnet motor comprising other permanently magnetic materials which are mounted on its rotor. The permanent magnet motor is more preferably a permanent magnet synchronous motor, and preferably a three-phase permanent magnet synchronous motor, since this is well able to withstand overload. Permanent magnet motors preferably have a very narrow clearance between the rotor and stator, which significantly improves the efficiency of such a motor relative to a squirrel cage motor or induction motor. The clearance between the rotor and stator is probably in the order of magnitude of several hundreds of micrometres to several millimetres, preferably between 0.1 and 10 mm, more preferably between 0.5 and 3 mm, still more preferably between 1 and 2 mm, and particularly about 1.5 mm. The clearance is preferably chosen such that a balance is achieved between friction caused by the liquid between the rotor and stator and efficiency of the electric motor.

According to a further preferred embodiment of the vessel propulsion device, the electric motor drives the drive shaft directly, i.e. the electric motor provides for direct driving of the drive shaft. This means that no further toothing or gearbox and the like is necessary between the electric motor and drive shaft. In direct driving less loss occurs due to friction, since the power is not transmitted by gear wheels, belts, chains and the like. Direct driving also produces less noise and has a longer lifespan, since it requires fewer moving parts compared to driving by means of for instance a transmission mechanism or similar transmission components. A particular additional advantage in the use of direct driving of the drive shaft by the electric motor is that the friction, i.e. resistance, resulting from the electrically insulating liquid between the rotor and stator remains very acceptable.

According to a further preferred embodiment of the vessel propulsion device, the liquid is brought to overpressure relative to a pressure prevailing outside the housing. A liquid reservoir is more preferably provided at a height relative to the housing of the vessel propulsion device in order to bring about a hydrostatic overpressure in the drive unit and/or housing. Still more preferably, the liquid is an oil, and the oil is preferably a biodegradable oil. The liquid is preferably chosen such that its viscosity decreases relatively greatly when the temperature rises. In the known vessel propulsion device the electric motor is placed in an air chamber in the housing and the bearings of the rotor of the electric motor are lubricated separately by a locally arranged oil bath or an oil line and the like. Fully immersing the drive unit in liquid, particularly oil, ensures cooling and lubrication of the electric motor. This is because heat coming from the electric motor is distributed in the liquid in efficient manner owing to its higher thermal conductivity coefficient as compared to air, usually a factor of ten or more. All moving parts of the electric motor are also lubricated continuously, which enhances the lifespan of such an electric motor. Because no separate lubrication of the bearings of the electric motor is required, the complexity of the propulsion device is reduced. Since the liquid comes into direct contact with the electric motor it must be (substantially) non-electrically conductive, i.e. electrically insulating, so that short-circuiting in the electric motor is prevented. It is further particularly advantageous for the liquid in the drive unit and/or housing to be brought to overpressure so that when a leak occurs in the housing, the liquid flows out and water present on the outer side of the housing does not flow in and does not come into contact with the drive unit. This therefore prevents short-circuiting in the electric motor when a significant leak occurs in the housing. Since the housing can lie at a depth of 5 to 10 metres, or even deeper, depending on the loading of the vessel, the water pressure on the outer side of the housing can rise to respectively about 0.5 to 1 bar, or more. A liquid reservoir is therefore preferably configured, e.g. arranged at a height, such that such a pressure can be reached, preferably by means of a hydrostatic pressure. In the case that the liquid is an oil use is preferably made of a biodegradable oil, since the liquid can flow into the surrounding water in the case of a leak in the housing. This prevents environmental damage in the case of such a leak. A liquid reservoir, particularly an oil reservoir, is preferably provided at some height so that the liquid is already brought to a determined hydrostatic pressure due to the difference in height between the reservoir and the housing. The circulation of the liquid is preferably configured such that the liquid first reaches the drive unit, is then preferably guided through a hollow shaft in the drive unit to the propeller housing, and is then guided from the propeller housing back to the reservoir. More preferably, the liquid is filtered before it returns to the reservoir. This is because the propeller housing comprises components, such as thrust bearings, of metal, which in the event of wear give off metal particles which then end up in the liquid. It is undesirable for metal particles to then, as a result of the liquid circulation, find their way into the electric motor, where great magnetic fields prevail which attract the particles and accumulate them in situ such that damage can be caused to the electric motor. It is further noted that there is only a small clearance between the rotor and stator of the electric motor, e.g. 1.5 mm, whereby accumulation of material therebetween will rapidly result in wear. More preferably provided between the drive unit and the propeller housing is a shaft seal element which prevents the liquid from being able to flow back from the propeller housing to the drive unit, so that wear particles, such as metal shavings, are unable to find their way from the propeller housing into the drive unit.

According to a further preferred embodiment of the vessel propulsion device, the liquid is circulated through the housing. The liquid is still more preferably circulated through the housing and a propeller housing of the propeller, and a shaft seal element is preferably provided between the housing and the propeller housing, such that the liquid can flow only from the housing to the propeller housing. The liquid is more preferably circulated through the housing such that the liquid reaches bearings of the drive unit before it reaches the rotor and the stator, e.g. the space between the rotor and stator. Still more preferably, the bearings are slide bearings, and the slide bearings are preferably provided with grooves which are arranged in the slide bearings such that the slide bearings force the liquid from the slide bearings to the rotor and stator, and particularly the gap between the rotor and stator. Separate circulation means, which preferably form separate closed circuits, can alternatively be provided for both the housing and the propeller housing so that the liquid used for lubrication and/or cooling of the propeller housing does not come into contact with the liquid used for lubrication and/or cooling of the housing. As a result, metal particles from the propeller housing do not end up in the housing, where they could cause damage to the electric motor of the drive unit. It is also possible to envisage the separate circulation means being provided with different liquids. The liquid is more preferably circulated through the housing such that the liquid reaches bearings of the drive unit before it reaches the rotor and the stator. This is because it is preferred to lubricate and/or cool the bearings of the drive unit with a liquid, e.g. oil, with a relatively high viscosity, while the electric motor is preferably lubricated and/or cooled with a liquid, e.g. oil, with a relatively low viscosity. This is because the tolerances inside the electric motor, e.g. the distance between the rotor and stator thereof, are preferably so small, e.g. about 1.5 mm between the rotor and stator, that a liquid with relatively high viscosity is less well able to spread between the clearances inside the electric motor or could impede the relative movements between separate components of the electric motor, e.g. that a liquid with relatively high viscosity in the gap between the rotor and stator results in significant friction and therefore reduced efficiency. When the liquid is first introduced at the bearings of the drive unit, the liquid will there heat up and, as a result of this heating, be less viscous. As a result, after it heats up at the bearings, the liquid will be more suitable for lubrication and/or cooling of the electric motor, e.g. between the rotor and stator, owing to its decreased viscosity. After passing the bearings and the rotor and stator, e.g. the gap between the rotor and stator, the liquid is preferably collected on the underside of the drive unit. After passing the bearings and then passing the gap between the rotor and stator, the liquid is more preferably cooled actively or passively during feedback thereof. The liquid is still more preferably cooled actively or passively during feedback thereof to the reservoir and/or in the reservoir. For this purpose a return conduit and/or the reservoir can be provided with a cooling element, such as a heat exchanger or the like.

According to a further preferred embodiment of the vessel propulsion device, it further comprises a warning system for detecting a leak in the housing, wherein the warning system comprises a pressure gauge, flow meter, thermometer or a combination thereof for the purpose of detecting the leak. A warning system is preferably provided in the return channel running from the propeller housing to a liquid reservoir and/or in the return channel running from the housing to the liquid reservoir. The liquid pressure is monitored, preferably continuously, by means of a pressure gauge, so that a sudden fluctuation in pressure can be noticed. Such a fluctuation can for instance result from the occurrence of a leak in the system, e.g. the housing of the vessel propulsion device, or when a blockage occurs in the circulation system. A flow meter can measure the throughflow of the liquid, so that when a leak or blockage occurs it will be noticed that less liquid is circulated through the system. A thermometer can detect temperature fluctuations, which can for instance result when, for a particular reason, the liquid does not flow sufficiently along the electric motor for cooling thereof.

According to a further preferred embodiment of the vessel propulsion device, the drive unit comprises an opening forming a hollow shaft provided substantially in line with the rotation axis of the rotor for the purpose of receiving the drive shaft. The drive unit can hereby be slid into the housing in longitudinal direction from an outer end of the vessel propulsion device for assembly purposes, after which the drive shaft of the propeller can be slid from that outer end into the opening of the drive unit, after which only mounting means need be activated to complete assembly of the vessel propulsion device. The same applies, vice versa, for disassembly of the propulsion device.

According to a further preferred embodiment of the vessel propulsion device, the rotor can be coupled to the drive shaft by means of a spline toothing. The rotor preferably comprises an internal spline toothing and the drive shaft an external spline toothing complementary thereto in order to couple the rotor to the drive shaft. Such a spline toothing enables the drive shaft to be inserted in longitudinal direction into the drive unit, after which this unit is directly coupled to the rotor of the electric motor. The drive shaft preferably runs at the same rotation speed as the electric motor, e.g. up to 500 rpm, so that a further intermediate toothing or gearbox is not essential. The spline toothings of the drive shaft and the rotor are preferably complementary, such that a form locking is brought about in order to minimize wear. The rotor can also be coupled to the drive shaft by means of a spline toothing with increased clearance. Owing to such a spline toothing with increased clearance, possible bending of the drive shaft is not transmitted to the rotor, and expansion due to heat is allowed to greater extent. In other words, there is preferably some clearance between the external spline toothing and internal spline toothing.

According to a further preferred embodiment of the vessel propulsion device, an earthing element is provided between the propeller and the drive unit for the purpose of earthing the propeller and the drive unit to the housing or a vessel. A residual current, which is for instance generated when the propeller drives the electric motor so that the electric motor functions as electric generator, can consequently be diverted to the housing or the vessel.

According to a second aspect of the invention, a vessel comprising a vessel propulsion device according to the invention is provided. Such a vessel therefore has at its disposal a relatively energy-efficient and compact propulsion device which is relatively low-maintenance and can be repaired in simple manner in the event of a possible defect. A vessel according to the invention can therefore be utilized in efficient manner, i.e. the vessel lies idle for a relatively short amount of time in the case of a defect in the vessel propulsion device, which enhances the profitability of such a vessel.

The invention will be further elucidated hereinbelow with reference to the accompanying drawings.
- Figure 1 is a perspective view of an embodiment of a vessel propulsion device;
- Figure 2A is an exploded perspective view of a vessel propulsion device;
- Figure 2B is a detail view of the front outer end of a drive unit according to Figure 2A;
- Figure 3A is a cross-section in a longitudinal direction of a vessel propulsion device;
- Figure 3B is a detail view of the front outer end of the vessel propulsion device according to Figure 3A;
- Figure 4 is a cross-section in longitudinal direction of a propeller with drive shaft of a vessel propulsion device;
- Figure 5 is a cross-section in longitudinal direction of a drive unit of a vessel propulsion device; and
- Figure 6 is a cross-section in longitudinal direction of a housing of a vessel propulsion device.

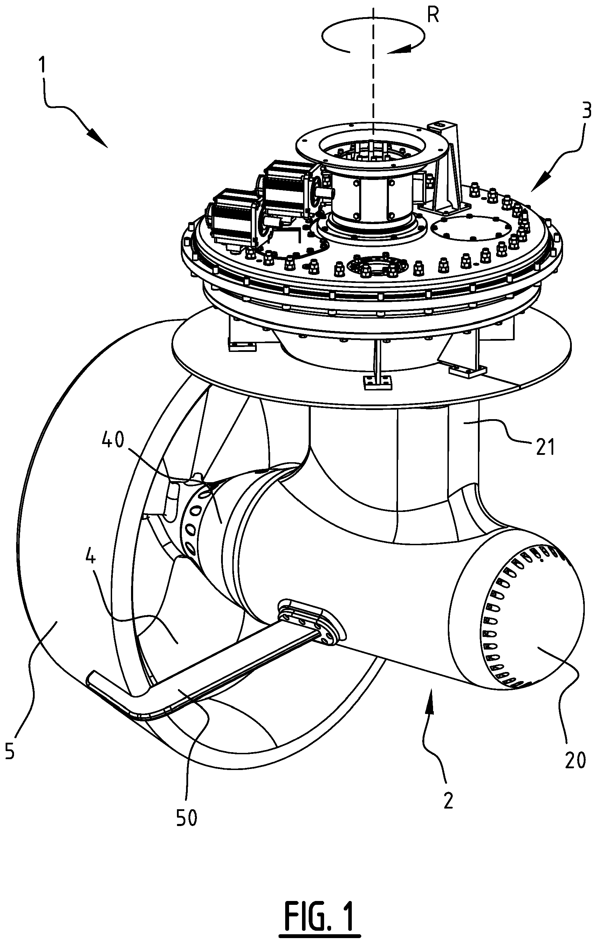

Figure 1 shows a perspective view of a vessel propulsion device 1. The propulsion device 1 comprises a streamlined housing 2 with a streamlined cap 20 on its front outer end. Housing 2 can be mounted via a rotation means 3 on a hull of a vessel (not shown) by means of a streamlined column 21. Propulsion device 1 is rotatable about a rotation axis R by means of the rotation means 3 in order to direct the direction of thrust of propeller 4. The propulsion is brought about by a propeller 4 which is received in a propeller duct 5, wherein propeller duct 5 is a duct with a convergent shape for the purpose of increasing the efficiency of propeller 4. This is because the shape of propeller duct 5 increases the thrust of the water flowing therethrough. Such a propeller duct 5 also contributes to the directional stability and reduces the chance of damage to propeller 4, i.e. contributes to the protection of propeller 4. Propeller duct 5 is mounted on housing 2 by means of two supports 50. Also visible in Figure 1 is the propeller housing 40, which will be further described below.

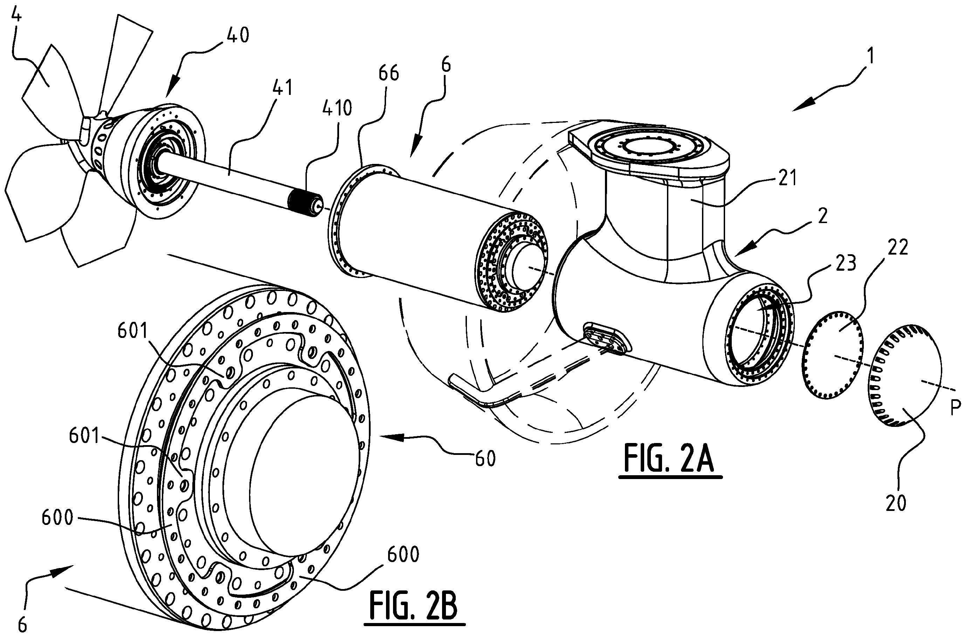

Figure 2A shows an exploded view of vessel propulsion device 1, i.e. in a disassembled state, wherein a number of components thereof are shown taken apart in the direction of the longitudinal axis P. Shown on the left-hand side is the propeller 4 with its propeller housing 40, as well as its drive shaft 41. Drive shaft 41 has at its front outer end an external spline toothing 410 whereby drive shaft 41 can be driven. Shown to the right of propeller 4 is an integral drive unit 6 which will be further described below. Housing 2 is configured such that drive unit 6 can be slid substantially in the direction of the longitudinal axis P into housing 2 from the rear outer end of housing 2, i.e. from the outer end where propeller 4 is located. After drive unit 6 has been fixed in housing 2, the front outer end of housing 2 can be sealed by means of a sealing plate 22, also referred to as cover plate, and streamlined cap 20, which streamlined cap 20 serves to streamline housing 2. When drive unit 6 is fixed at its outer ends in housing 2, propeller 4 can be slid with its drive shaft 41 into an opening of drive unit 6, after which propeller 4 can be fixed with its propeller housing 40 to housing 2. For disassembly of vessel propulsion device 1, such as when replacing the drive unit 6, the operations can be performed in reverse order. This means that propeller housing 40 can be released from housing 2, after which drive shaft 41 of propeller 4 can be slid out of drive unit 6. After this, streamlined cap 20 and sealing plate 22 can be released from housing 2, and drive unit 6 can then be released on both its outer ends from housing 2, and then removed. Vessel propulsion device 1 can therefore be assembled and disassembled in relatively simple manner. In addition to streamlining, streamlined cap 20 also serves as bumper, i.e. shock absorption element. This is because, in normal use, streamlined cap 20 is generally directed in navigation direction of a vessel, and will be damaged first in the case of a possible collision. In order to prevent water from getting into housing 2 when streamlined cap 20 is damaged the sealing plate 22 is also provided, which can be deemed a backup seal of housing 2 against water in the event that streamlined cap 20 is damaged. It is also possible to envisage a water sensor, e.g. a pressure sensor or moisture sensor and the like, being provided in streamlined cap 20 so that a possible leak, which has for instance resulted from a collision, can be noticed in timely manner.

Figure 2B shows a detail view of the front outer end of drive unit 6. Drive unit 6 comprises a suspension ring 60 which in mounted state can be mounted on both drive unit 6 and housing 2. Suspension ring 60 consists substantially of two distinguishable parts, these being a suspension part 600, i.e. an annular mounting element, and a deformation flange 601. Suspension part 600 ensures that a torque exerted on housing 2 by the electric motor 7 incorporated in drive unit 6 is exerted uniformly on housing 2. Suspension part 600 therefore forms a rigid element in peripheral direction. When electric motor 7 of drive unit 6 is in operation, it can expand slightly as a result of heating. Deformation flange 601 is flexible in longitudinal direction of drive unit 6 to a certain extent in order to enable expansion of the electric motor in longitudinal direction. Suspension ring 60 can be manufactured from a metal, such as aluminium, subject to the desired degree of expansion of electric motor 7 and the forces exerted therein on suspension ring 60. It is likewise possible to envisage suspension ring 60 being manufactured from another suitable material known to the skilled person, such as a rubber, a plastic and the like. Suspension ring 60 is preferably mounted after drive unit 6 has been slid into housing 2. When front opening 23 at the front outer end of housing 2 has a smaller diameter than suspension ring 60, this ring can also consist of a plurality of individual parts, so that it can nevertheless be inserted through front opening 23. For this purpose it is for instance possible to envisage the ring consisting of two or three ring parts, together in mounted state fulfilling the function of suspension ring 60.

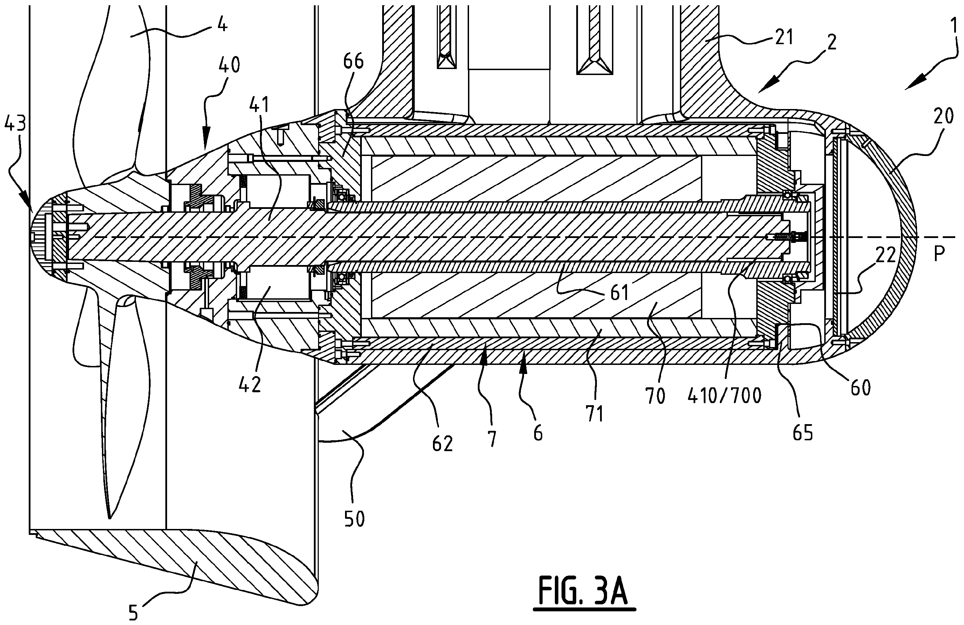

Figure 3A shows a cross-section in longitudinal direction of vessel propulsion device 1 in assembled state. Drive unit 6, also referred to as electric motor cartridge, is therefore received in housing 2 and fixed thereto with both outer ends (right-hand and left-hand side in Figure 3A). On the front side (right-hand side in the drawing) drive unit 6, which is flexible in axial direction, is fixed to housing 2 by means of the above stated suspension ring 60, and on the rear side (left-hand side in the drawing), in rigid manner, by means of a mounting flange 66. Drive unit 6 comprises an opening, or shaft or blind hole, which is formed by a hollow shaft 61, wherein hollow shaft 61 is dimensioned such that it can receive the drive shaft 41 of propeller 4 at least partially. External spline toothing 410 of drive shaft 41 engages here on an internal spline toothing 700 of a rotor 70 of an electric motor 7 incorporated in drive unit 6. Electric motor 7 comprises a stator 71 and a rotor 70, wherein stator 71 is stationary during operation and rotor 70 rotates around its rotation axis inside stator 71 during operation, this rotation axis corresponding substantially with longitudinal axis P. During operation, in assembled state, rotor 70 drives the drive shaft 41 of propeller 4 by means of its internal spline toothing 700, which engages on the external spline toothing 410 of drive shaft 41. A separate clutching operation in respect of drive shaft 41 and electric motor 7 is therefore not necessary, since they are coupled to each other by the insertion of drive shaft 41 into hollow shaft 61, wherein the spline toothings 410, 700 necessarily engage on each other and are consequently coupled. Housing 2 is preferably filled with a non-electrically conductive oil, or a practically non-electrically conductive oil, for lubrication and cooling of vessel propulsion device 1. An oil reservoir is preferably arranged in the vessel at some height so that the oil is brought to a hydrostatic overpressure relative to the water pressure prevailing outside housing 2. The oil therefore preferably flows into the housing from above, after which it first cools and lubricates drive unit 6 and the slide bearings 63 thereof, after which the oil is pumped or otherwise forced through hollow shaft 61 in the direction of propeller 4. The oil enters propeller housing 40 through a shaft seal which is configured such that the oil can flow into propeller housing 40 but cannot flow back to drive unit 6. This is because propeller housing 40 contains metallic components which can give off metal particles in the event of wear. The shaft seal prevents the metal particles from ending up in drive unit 6, where they can accumulate close to stator 71 and rotor 70 of electric motor 7, which would therefore be damaged thereby. The oil is then pumped or otherwise forced from propeller housing 40 back to the reservoir. Also provided for the reservoir is a filter (not shown) which rids the oil of undesired particles, such as metal particles, after which the oil can once again be circulated through housing 2.

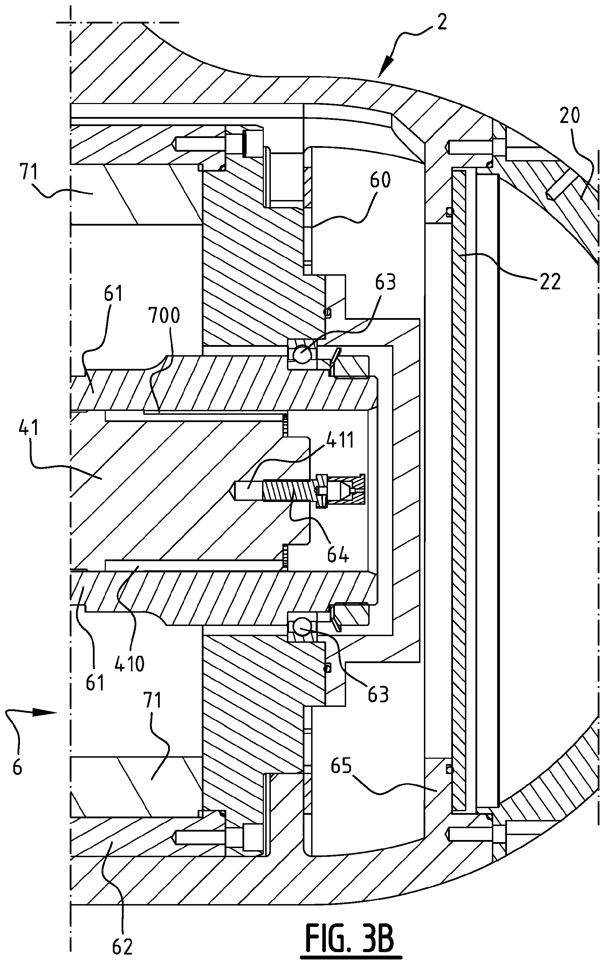

Figure 3B is a detail view of the front outer end of drive unit 6 in assembled state in housing 2. The internal spline toothing 700 of rotor 70 of electric motor 7 is arranged on the internal surface of hollow shaft 61, so that rotor 70 transmits its drive torque via hollow shaft 61 to drive shaft 41. Hollow shaft 61 is bearing-mounted by means of slide bearings 63 on both outer ends thereof. It is also possible to envisage hollow shaft 61 being bearing-mounted by means of other types of bearings, such as ball bearings, magnetic bearings, needle bearings, cylindrical bearings, hourglass bearings, conical roller bearings, spherical roller bearings and other bearings known to the skilled person. Slide bearings 63 are preferably manufactured from a plastic or a fibre-reinforced plastic. It is likewise possible to envisage slide bearings 63 being manufactured from another suitable material, such as a composite material, a metal, an alloy such as bronze, or a combination of metals and plastics and the like. When slide bearings 63 are manufactured from plastic, and not from a metal or alloy, particles released as a result of wear are prevented from accumulating in electric motor 7 due to its magnetic attractive force. Since housing 2 is filled with non-electrically conductive oil, slide bearings 63 are lubricated thereby on an almost continuous basis in order to minimize wear. Drive shaft 41 of propeller 4 further comprises a centred recess 411 which is provided substantially concentrically with the rotation axis of drive shaft 41. In mounted state of drive shaft 41 a current diverting element 64, such as a mercury switch, sliding contact, carbon or copper brush and the like, for instance in the form of a swivel, of drive unit 6 is received at least partially in the centred recess 411 in order to divert possible residual currents, which could for instance result when propeller 4 drives electric motor 7 so that it functions as a generator, to housing 2, i.e. in order to function as earthing. Drive unit 6 is further centred in housing 2 by means of a fitting edge 65 which connects to an outer end of drive unit 6 in order to reduce vibrations and wear of drive unit 6 due to contact with housing 2 and/or hollow shaft 61.

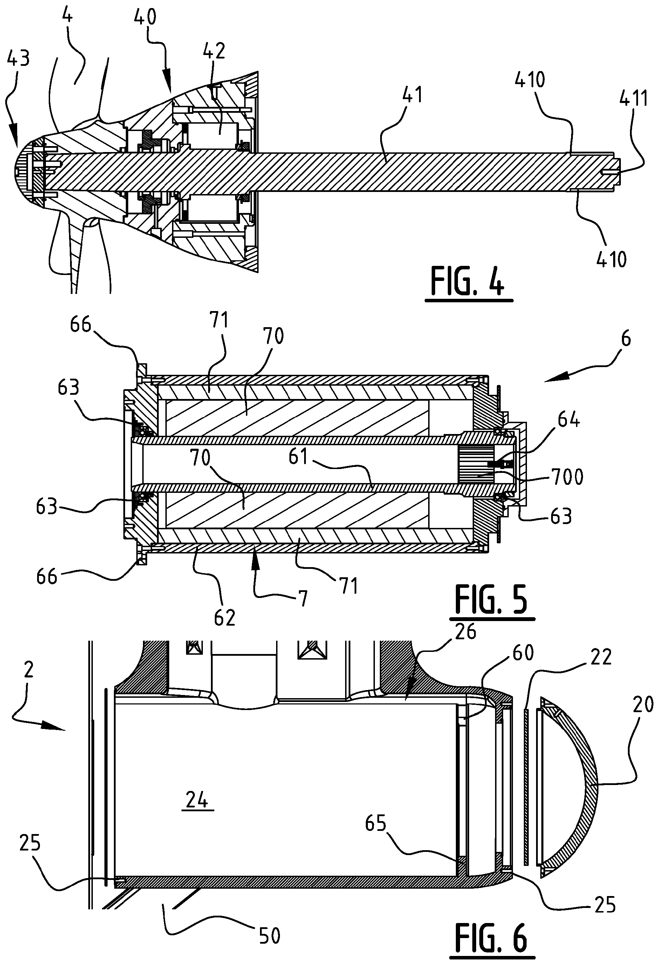

Figure 4 shows a cross-section in longitudinal direction of propeller 4. Propeller 4 is connected close to its rear outer end to drive shaft 41 with a propeller cap 43. The drive shaft preferably narrows from propeller cap 43 toward its outer end, i.e. toward its external spline toothing 410. For protection against axial forces thrust bearings 42 are also received in propeller housing 40, so that possible shocks in axial direction are damped in effective manner. It is also possible to envisage a different type of axial bearing known to the skilled person being provided. At its front outer end drive shaft 41 comprises an external spline toothing 410 whereby the drive shaft can be driven. Drive shaft 41 further comprises a centred recess 411 which is provided concentrically with the rotation axis of drive shaft 41 in order to earth the shaft in mounted state inside electric motor 7 of drive unit 6 to housing 2 in order to prevent damage, e.g. short-circuiting, due to possible residual currents. In mounted state the propeller 4 is lubricated by the liquid, e.g. oil, with which housing 2 of the vessel propulsion device 1 is filled.

The drive unit 6 is shown in Figure 5. Drive unit 6 comprises a unit housing 62, preferably manufactured from aluminium, inside which electric motor 7 lies. Unit housing 62 is a substantially cylindrical sleeve in which electric motor 7 is arranged substantially concentrically. Electric motor 7 comprises a stator 71 and a rotor 70 arranged rotatably inside stator 71. Rotor 70 is rigidly connected to hollow shaft 61 of drive unit 6, which is likewise arranged substantially concentrically in unit housing 62. When rotor 70 rotates, it simultaneously rotates the hollow shaft 61 which is bearing-mounted in drive unit 6 by means of slide bearings 63. Arranged at a front outer end of hollow shaft 61 is an internal spline toothing with which the rotation of hollow shaft 61 can be transmitted to a drive shaft 41. Provided at that same outer end is a current diverting element 64 which provides for earthing of a drive shaft 41 and slide bearings 63 to housing 6 in order to prevent damage due to possible residual currents.

Figure 6 shows the housing 2 of vessel propulsion device 1. Housing 2 comprises a recess 24 for receiving a drive unit 6, and several fastening holes 25 whereby inter alia the drive unit 6 as well as the streamlined cap 20 and suspension ring 60 can be fixed to the housing. The housing has recesses 26 for cables (not shown), which cables provide inter alia the electric power for electric motor 7. Streamlined cap 20, sealing plate 22 and suspension ring 60 all form redundant barriers for the liquid, e.g. oil, in housing 2 on one side and the water outside housing 2 during operation of vessel propulsion device 1.

It is noted that the invention is not limited to the drawn embodiments, but also extends to other variants falling within the scope of the appended claims.

## Claims

1. Vessel propulsion device (1), comprising:
a propeller (4) which is connected to a drive shaft (41);
an integral drive unit (6) arranged releasably in a housing (2) of the vessel propulsion device (1) and comprising an electric motor (7) which is configured to drive the drive shaft (41),
wherein the electric motor (7) is provided with a rotor (70), which can be coupled to the drive shaft (41), and a stator (71),
wherein the drive unit (6) is filled with an electrically insulating liquid,
wherein the drive unit (6) can be connected close to its outer ends to the housing (2) by means of mounting means (60), and
**characterized in that** at least one of the mounting means (60) is formed from an annular mounting element (600) and at least one resilient flange (601) which points radially inward from the inner edge of the annular mounting element (600) and is substantially coplanar therewith, wherein the housing (2) is coupled to the annular mounting element (600) and the drive unit (6) is coupled to the at least one resilient flange (601).

2. Vessel propulsion device (1) according to any one of the foregoing claims, wherein the electric motor (7) is a permanent magnet motor.

3. Vessel propulsion device according to any one of the foregoing claims, wherein the electric motor (7) drives the drive shaft (41) directly.

4. Vessel propulsion device (1) according to any one of the foregoing claims, wherein the liquid is brought to overpressure relative to a pressure prevailing outside the housing (2).

5. Vessel propulsion device (1) according to claim 4, wherein a liquid reservoir is provided at a height relative to the housing (2) of the vessel propulsion device (1) in order to bring about a hydrostatic overpressure in the housing (2).

6. Vessel propulsion device (1) according to any one of the foregoing claims, wherein the liquid is circulated through the housing (2).

7. Vessel propulsion device (1) according to claim 6, wherein the liquid is circulated through the housing (2) and a propeller housing (40) of the propeller (4).

8. Vessel propulsion device (1) according to claim 6 or 7, wherein the liquid is circulated through the housing (2) such that the liquid reaches bearings (63) of the drive unit (6) before it reaches the rotor (70) and the stator (71).

9. Vessel propulsion device (1) according to any one of the foregoing claims, further comprising a warning system for detecting a leak in the housing (2), wherein the warning system comprises a pressure gauge, flow meter, thermometer or a combination thereof for the purpose of detecting the leak.

10. Vessel propulsion device (1) according to any one of the foregoing claims, wherein the drive unit (6) comprises an opening forming a hollow shaft (61) provided substantially in line with the rotation axis of the rotor (70) for the purpose of receiving the drive shaft (41).

11. Vessel propulsion device (1) according to any one of the foregoing claims, wherein the rotor (70) can be coupled to the drive shaft (41) by means of a spline toothing (410, 700).

12. Vessel propulsion device according to claim 11, wherein the rotor (70) comprises an internal spline toothing (700) and the drive shaft (41) an external spline toothing (410) complementary thereto in order to couple the rotor (70) to the drive shaft (41).

13. Vessel comprising a vessel propulsion device (1) according to any one of the foregoing claims.

## Patentansprüche

1. Schiffsantriebsvorrichtung (1), aufweisend:
einen Propeller (4), der mit einer Antriebswelle (41) verbunden ist;
eine integrierte Antriebseinheit (6), die in einem Gehäuse (2) der Schiffsantriebsvorrichtung (1) lösbar angeordnet ist und einen Elektromotor (7) aufweist, der zum Antrieb der Antriebswelle (41) ausgebildet ist,
wobei der Elektromotor (7) mit einem mit der Antriebswelle (41) koppelbaren Rotor (70) sowie mit einem Stator (71) versehen ist,
wobei die Antriebseinheit (6) mit einer elektrisch isolierenden Flüssigkeit befüllt ist,
wobei die Antriebseinheit (6) im Bereich ihrer äußeren Enden durch Befestigungsmittel (60) mit dem Gehäuse (2) verbindbar ist, und
**dadurch gekennzeichnet, dass** zumindest eines der Befestigungsmittel (60) aus einem ringförmigen Befestigungselement (600) und zumindest einem elastischen Flansch (601) gebildet ist, welcher vom Innenrand des ringförmigen Befestigungselements (600) radial nach innen weist und im Wesentlichen koplanar dazu ausgebildet ist, wobei das Gehäuse (2) mit dem ringförmigen Befestigungselement (600) und die Antriebseinheit (6) mit dem zumindest einen elastischen Flansch (601) gekoppelt ist.

2. Schiffsantriebsvorrichtung (1) nach einem der vorherigen Ansprüche, wobei der Elektromotor (7) ein Permanentmagnetmotor ist.

3. Schiffsantriebsvorrichtung nach einem der vorherigen Ansprüche, wobei der Elektromotor (7) die Antriebswelle (41) direkt antreibt.

4. Schiffsantriebsvorrichtung (1) nach einem der vorherigen Ansprüche, wobei die Flüssigkeit gegenüber einem außerhalb des Gehäuses (2) herrschenden Druck auf Überdruck gebracht wird.

5. Schiffsantriebsvorrichtung (1) nach Anspruch 4, wobei in einer Höhe relativ zum Gehäuse (2) der Schiffsantriebsvorrichtung (1) ein Flüssigkeitsreservoir vorgesehen ist, um im Gehäuse (2) einen hydrostatischen Überdruck zu erzeugen.

6. Schiffsantriebsvorrichtung (1) nach einem der vorherigen Ansprüche, wobei die Flüssigkeit durch das Gehäuse (2) zirkuliert wird.

7. Schiffsantriebsvorrichtung (1) nach Anspruch 6, wobei die Flüssigkeit durch das Gehäuse (2) sowie durch ein Propellergehäuse (40) des Propellers (4) zirkuliert wird.

8. Schiffsantriebsvorrichtung (1) nach Anspruch 6 oder 7, wobei die Flüssigkeit durch das Gehäuse (2) so zirkuliert wird, dass die Flüssigkeit zunächst Lager (63) der Antriebseinheit (6) erreicht, bevor sie den Rotor (70) und den Stator (71) erreicht.

9. Schiffsantriebsvorrichtung (1) nach einem der vorherigen Ansprüche, ferner aufweisend ein Warnsystem zum Erkennen eines Lecks im Gehäuse (2), wobei das Warnsystem ein Druckmessgerät, einen Durchflussmesser, ein Thermometer oder eine Kombination davon aufweist, um das Leck erkennen zu können.

10. Schiffsantriebsvorrichtung (1) nach einem der vorherigen Ansprüche, wobei die Antriebseinheit (6) eine eine Hohlwelle (61) bildende Öffnung aufweist, die zur Aufnahme der Antriebswelle (41) im Wesentlichen in einer Linie mit der Drehachse des Rotors (70) angeordnet ist.

11. Schiffsantriebsvorrichtung (1) nach einem der vorherigen Ansprüche, wobei der Rotor (70) mittels einer Keilwellen-Verzahnung (410, 700) mit der Antriebswelle (41) gekoppelt werden kann.

12. Schiffsantriebsvorrichtung nach Anspruch 11, wobei der Rotor (70) eine Innenkeilverzahnung (700) und die Antriebswelle (41) eine dazu komplementäre Außenkeilverzahnung (410) aufweist, um den Rotor (70) mit der Antriebswelle (41) zu koppeln.

13. Schiff mit einer Schiffsantriebsvorrichtung (1) nach einem der vorherigen Ansprüche.

## Revendications

1. Dispositif de propulsion de navire (1), comprenant :
une hélice (4) qui est couplée à un arbre d'entraînement (41) ;
une unité d'entraînement intégrale (6) agencée de manière amovible dans un logement (2) du dispositif de propulsion de navire (1) et comprenant un moteur électrique (7) qui est configuré de manière à entraîner l'arbre d'entraînement (41),
dans lequel le moteur électrique (7) comporte un rotor (70), qui peut être couplé à l'arbre d'entraînement (41), et un stator (71),
dans lequel l'unité d'entraînement (6) est remplie d'un liquide électriquement isolant,
dans lequel l'unité d'entraînement (6) peut être reliée, à proximité de ses extrémités externes, au logement (2) à l'aide de moyens de montage (60), et
**caractérisé en ce qu'**au moins l'un des moyens de montage (60) est formé à partir d'un élément de montage annulaire (600) et d'au moins une bride élastique (601) qui est orientée radialement vers l'intérieur à partir du bord interne de l'élément de montage annulaire (600) et est sensiblement coplanaire avec ce dernier, dans lequel le logement (2) est couplé à l'élément de montage annulaire (600) et l'unité d'entraînement (6) est couplée à la au moins une bride élastique (601).

2. Dispositif de propulsion de navire (1) selon l'une quelconque des revendications précédentes, dans lequel le moteur électrique (7) est un moteur à aimant permanent.

3. Dispositif de propulsion de navire selon l'une quelconque des revendications précédentes, dans lequel le moteur électrique (7) entraîne directement l'arbre d'entraînement (41).

4. Dispositif de propulsion de navire (1) selon l'une quelconque des revendications précédentes, dans lequel le liquide est soumis à une surpression par rapport à une pression régnant à l'extérieur du logement (2).

5. Dispositif de propulsion de navire (1) selon la revendication 4, dans lequel un réservoir de liquide est agencé à une certaine hauteur par rapport au logement (2) du dispositif de propulsion de navire (1) afin d'obtenir une surpression hydrostatique dans le logement (2).

6. Dispositif de propulsion de navire (1) selon l'une quelconque des revendications précédentes, dans lequel le liquide est mis en circulation à travers le logement (2).

7. Dispositif de propulsion de navire (1) selon la revendication 6, dans lequel le liquide est mis en circulation à travers le logement (2) et un logement d'hélice (40) de l'hélice (4).

8. Dispositif de propulsion de navire (1) selon la revendication 6 ou 7, dans lequel le liquide est mis en circulation à travers le logement (2) de telle sorte que le liquide atteint les paliers (63) de l'unité d'entraînement (6) avant d'atteindre le rotor (70) et le stator (71).

9. Dispositif de propulsion de navire (1) selon l'une quelconque des revendications précédentes, comprenant, en outre, un dispositif d'alerte afin de détecter une fuite dans le logement (2), dans lequel le dispositif d'alerte comprend un capteur de pression, un débitmètre, un thermomètre ou une combinaison de ces derniers afin de détecter la fuite.

10. Dispositif de propulsion de navire (1) selon l'une quelconque des revendications précédentes, dans lequel l'unité d'entraînement (6) comprend une ouverture formant un arbre creux (61) agencée sensiblement en ligne avec l'axe de rotation du rotor (70) afin de recevoir l'arbre d'entraînement (41).

11. Dispositif de propulsion de navire (1) selon l'une quelconque des revendications précédentes, dans lequel le rotor (70) peut être couplé à l'arbre d'entraînement (41) au moyen d'une denture cannelée (410, 700).

12. Dispositif de propulsion de navire selon la revendication 11, dans lequel le rotor (70) comprend une denture cannelée interne (700) et l'arbre d'entraînement (41) une denture cannelée externe (410) complémentaire à cette dernière dans le but de coupler le rotor (70) à l'arbre d'entraînement (41).

13. Navire comprenant un dispositif de propulsion de navire (1) selon l'une quelconque des revendications précédentes.
